# EUROPEAN PATENT SPECIFICATION

(11) **EP 1 637 003 B1**
(45) Date of publication and mention of the grant of the patent: **27.01.2010**
(21) Application number: 04736849.3
(22) Date of filing: 15.06.2004
(51) Int. Cl.: H04W 56/00, G06F 17/30

(54) **DATABASES SYNCHRONIZATION**
DATENBANKSYNCHRONISATION
SYNCHRONISATION DE BASES DE DONNEES

(30) Priority: 20.06.2003 EP 03291520
(43) Date of publication of application: 22.03.2006
(73) Proprietor: Gemalto SA, 92190 Meudon (FR)
(72) Inventor: ABELLAN SEVILLA, Jorge, Axalto SA, F-92120 Montrouge (FR); DUBOIS, Christophe, Axalto SA, F-92120 Montrouge (FR)
(74) Representative: Jacquot, Ludovic R. G.
(86) International application number: PCT/IB2004/001984
(87) International publication number: WO 2004/114152

(56) References cited:
- WO-A-02/059773
- US-A1- 2002 055 939
- US-B1- 6 169 988
- US-B1- 6 505 215
- "Smart cards; Card Application Toolkit (CAT (Release 6)" ETSI TS 102 223 V6.0.0, February 2003 (2003-02), pages 1-16, XP002259807

## Description

### Field of the Invention

The invention deals with synchronization of databases. Data synchronization is the act of establishing equivalence between two data collections, where each data element in one item maps to a data item in the other, and each item and its respective mapping having a content which is equivalent.

### Prior Art

The existing technology allows Terminal Equipments to exchange and to synchronize data with an external device. The way that a synchronization process is requested depends on the protocol used, which is based on the capabilities of the terminal equipment.

US 6, 505,215 discloses a method for synchronizing databases, a first database being stored in a first data processing system, a second database being stored in a second data processing system,
said method comprising:
a. A loading step in which an application is loaded into said first data processing system;
b. An execution step in which the application executes a command;
c. A requesting step in which said command requests the first data processing system to process a synchronization step, said command providing the first data processing system with the information about the synchronization parameters to be used for synchronizing the content of the first and the second databases.

In this prior reference, the first data processing system is a small microprocessor based computer system such as a cellular phone or a handheld personal information manager.

This invention particularly applies to security tokens such as smart cards, potentially equipped with a subscription related application provided by a service provider or network operator. This application can be indifferently a SIM (Subscriber Identity Module), a USIM (Universal Subscriber Identity Module), a RUIM (Removable User Identity Module) or any emergent smart card application managed/controlled by an entity such as an operator.

If an operator wants to create his own data synchronisation applications (e.g. to provide management procedures linked to synchronisation process), some important facts shall be considered:
"The operator does not own the terminal equipment, it is owned by the user (see the reference cited above).
-Most terminal manufactures do not provide standardized capabilities to implement customizable applications in their terminals.
-Applications present in the terminals are not controlled by the operator (see also the above cited reference).
-There is a standardized way to update/download applications in the card. Other prior art is disclosed in : Smart Cards; Card Application Toolkit (CAT) (Release 6)", ETSI TS 102 223 V6.0.0, February 2003, pages 1 to 16.

### The Invention

The main objective of the invention is to apply the technology known by the above mentioned prior document to the control of the synchronisation processes of a mobile equipement using a security token thereby rendering the process easier and more reliable, in particular in the field of security.

The invention has therefore as an object a method according to claim 1.

In this way, the command will operate as an interface between the application and the synchronisation capabilities of the User Equipment.

The card is owned and controlled by the operator. Moreover, the card applications can interact with the terminal, the user, and the network by means of existing "Card Application Toolkit" commands. In this way, according to the invention, the synchronization process is initiated by the card and not the mobile phone. This new command is added within the Card Application Toolkit that can be launched either locally by the user or a special application, or either remotely by the operator via the existing OTA (Over The Air) process. So, the invention can be applied to allow a user or a card application to command the execution of a data synchronization process between a UE (User Equipment) and an external entity. A User Equipment is a device allowing a user access to network services. The User Equipment is at least composed of a terminal equipment (e.g. a mobile equipment) and a smart card.

In our example, this new command will send to the mobile the information needed to perform the synchronization: source device, destination device, used synchronization protocol, used transport layer, type of synchronization and database to synchronize.

It will be easier to understand the invention on reading the description below, given as an example and referring to the attached drawings.

### In the drawing:

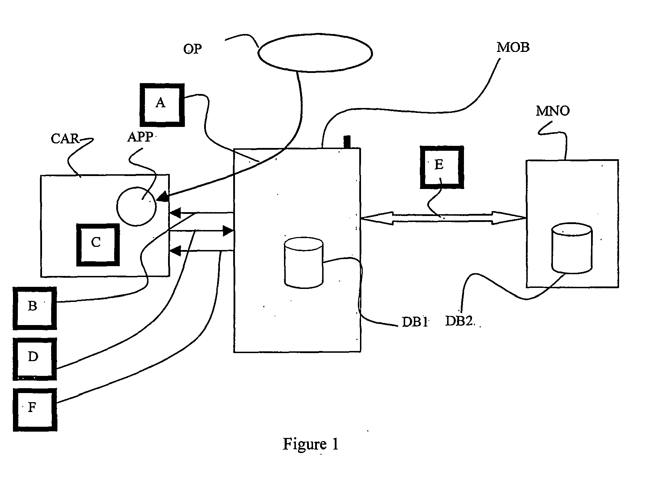

Figure 1 is a block diagram view of the architecture of a computer system on which the solution can be applied. On this figure appear some arrows illustrating different steps of the invention.

### Detailed description of examples illustrating the invention

A Mobile Network Operator (MNO) implements a device management system consisting in the following components (see figure 1):
- A database DB1 in the mobile (MOB) containing a list of basic parameters (i.e. IMEI, used language, sounds, etc...) and a list of applications and games that are installed in the device together with their operating parameters (version, size,...). This database is called Local Device Management Database. In another example, this database should have been stored in the SIM card itself.
- A copy of this database DB2 in a MNO's server. Let us call this database MNO's Device Management Database.
- A device management application in the SIM. This application is controlled and managed by the MNO. The application is in charge of analysing different parameters (e.g. time that the equipment has been connected) and can dialog with the MNO through a secured channel.

Thanks to the command in the card Application Toolkit, following the MNO's synchronization policy, the SIM application is able to ask the mobile equipment to start a synchronization process of his Local Device Management Database with the MNO's Device Management Database.

This synchronization can be summarized as follows: (see fig.1)
A. The MNO installs a device management application in the subscriber's SIM. The MNO may update this application or modify any parameters used since this is completely controlled by him through a secured communication channel.
B. The card CAR is informed of different events that may occur in the mobile equipment or in the network. The device management application may be informed of there events. This may include data regarding terminal capabilities.
C. Following the MNO's policy contained in the device management application and considering the events and/or messages received, the device management application may conclude that a synchronization of the Mobile Local Database with the MNO's Device Management Database is needed.
D. The device management application uses a new command in the card application toolkit: "Request Synchronization". This command informs the mobile that a new synchronization is requested. In a preferred embodiment, the device management application gives to the mobile synchronization agent the following information:
   - synchronization protocol: Synchronization protocol that should be used. (e.g. SYNCML)
   - session/transport layer: Transport or session layer that should be used (e.g. WSP)
   - type of synchronization:Type of synchronization that should be used (e.g. refresh from the client)
   - Source database: Unique Identifier of the local database in the client. Containing:
      i. device: identifier of the device containing the source database (e.g. IMEI of the mobile equipment)
      ii. database : identifier of the database (e.g. an URL of the Local Device Management Database)
   - Target database: Unique identifier of the database in the server to be synchronized. Containing:
      i. device: identifier of the device containing the target database (e.g. URL of the MNO's server)
      ii. database : identifier of the database (e.g. an URL of the MNO's Device Management Database)
   - Notification: Whether the Application shall be notified of the final result of the synchronization. (e.g. No notification requested)
E. The Mobile equipment receives all the parameters. The mobile is now able to initiate a synchronization process using the information given in the "Request synchronization" command. Synchronization is performed between the Local Device Management Database in the mobile and the MNO's Device Management Database in the MNO's server. Advantageously, a program is able to receive all the parameters and to activate the synchronization process.
F. The card device management application may be informed of the synchronization results if this was requested in the previous "Request synchronization" command.

This controlled synchronization may permit the MNO to offer different services to their subscribers and to perform various management functions. For example, knowing what is the version of an application currently installed in the mobile device, MNO is able to propose an available upgrade.

To be noted is that the source database may be any database that can be accessed by the mobile equipment including databases (files, applications,...) of the SIM. This database can be indifferently located in the card CAR or in the mobile equipment MOB.

To be also noticed is that the application in the card could use the card application toolkit functionalities to interact with other entities (e.g. the user). In this case, for instance, the user may be prompted before the synchronization command is sent, or it could be informed after the successful synchronization had taken place.

## Claims

1. A method for synchronizing databases (DB1, DB2), a first database (DB1) being stored in a mobile apparatus (MOB) or in a security token (CAR), controlled by an operator (OP), coupled to the mobile apparatus, a second database (DB2) being stored in a data processing system (MNO),
said method comprising:
a. loading an application (APP) into the security token (CAR), the application being able to request the mobile apparatus to start a synchronisation process of the first database with the second database according to a synchronisation policy,
b. executing the application (APP) ;
c. receiving, by the application (APP), of messages or events that occur in the mobile apparatus (MOB) or in a network,
d. in response to the messages or events received and following the synchronisation policy, concluding or not, by the application (APP), that a synchronisation of the first and second databases is needed, and
e. if a synchronisation is needed, transmitting, by the application (APP), a command to the mobile apparatus (MOB) that informs the mobile apparatus that a new synchronisation is requested, said command providing the mobile apparatus (MOB) with information about synchronization parameters to be used for synchronizing the content of the first (DB1) and the second (DB2) databases,
f. initiating, by the mobile apparatus (MOB), the synchronisation process of the first and second databases in response to the reception of the command.

2. The method according to claim 1, **characterized in that** the information includes the identifier of the database (DB2) to be synchronized.

3. The method according to claim 1, **characterized in that** the information includes the synchronization protocol to be used between the mobile apparatus and the data processing system.

4. The method according to claim 1, **characterized in that** the information includes the identifier of the first database (DB1).

5. The method according to claim 1, **characterized in that** the security token is a smart card.

6. The method according to claim 1, **characterized in that** the application is informed of the synchronization result between the 1st and 2nd databases.

7. The method according to claim 1 or 6, **characterized in that** the application is informed of the synchronization result if this was requested in the command.

8. The method according to claim 1, wherein the command is a card application toolkit command.

9. The method according to claim 1, wherein the mobile apparatus (MOB) executes a program able to receive all the synchronisation parameters and to start the synchronisation process.

## Patentansprüche

1. Eine Methode zur Synchronisation von Datenbanken (DB1, DB2), eine erste Datenbank (DB1) ist auf einem mobilen System (MOB) oder auf einem Security-Token (CAR) gespeichert, gesteuert von einem Operator (OP), verbunden mit dem mobilen System, eine zweite Datenbank (DB2) ist auf einem Datenverarbeitungssystem (MNO) gespeichert die genannte Methode umfasst:
a. Aufspielen einer Anwendung (APP) auf den Security-Token (CAR), die Anwendung kann das mobile System auffordern, einen Synchronisationsprozess der ersten Datenbank mit der zweiten Datenbank gemäß einem Synchronisationsprotokoll zu starten,
b. Ausführen der Anwendung (APP);
c. die Anwendung (APP) empfängt Nachrichten oder Ereignisse, die im mobilen System (MOB) oder im Netzwerk auftreten,
d. die Anwendung (APP) erkennt, ob eine Synchronisation der ersten und zweiten Datenbank als Reaktion auf die empfangenen Nachrichten oder Ereignisse und unter Befolgung des Synchronisationsprotokolls erforderlich ist und
e. wenn eine Synchronisation erforderlich ist, übermittelt die Anwendung (APP) einen Befehl an das mobile System (MOB), der das mobile System informiert, dass eine neue Synchronisation angefordert wurde; der genannte Befehl versorgt das mobile System (MOB) mit Informationen über die Synchronisationsparameter, die für die Synchronisation des Inhalts der ersten (DB1) und zweiten (DB2) Datenbank anzuwenden sind,
f. das mobile System (MOB) initiiert den Synchronisationsprozess der ersten und zweiten Datenbank als Reaktion auf den empfangenen Befehl.

2. Methode nach Anspruch 1, **dadurch gekennzeichnet, dass** die Information den Bezeichner der zu synchronisierenden Datenbank (DB2) enthält.

3. Methode nach Anspruch 1, **dadurch gekennzeichnet, dass** die Information das zwischen dem mobilen System und dem Datenverarbeitungssystem anzuwendende Synchronisationsprotokoll enthält.

4. Methode nach Anspruch 1, **dadurch gekennzeichnet, dass** die Information den Bezeichner der ersten Datenbank (DB1) enthält.

5. Methode nach Anspruch 1, **dadurch gekennzeichnet, dass** der Security-Token eine Chipkarte ist.

6. Methode nach Anspruch 1, **dadurch gekennzeichnet, dass** die Anwendung über das Synchronisationsergebnis der ersten und zweiten Datenbank informiert wird.

7. Methode nach Anspruch 1 oder 6, **dadurch gekennzeichnet, dass** die Anwendung über das Synchronisationsergebnis informiert wird, wenn dies im Befehl angefordert wurde.

8. Methode nach Anspruch 1, wobei der Befehl ein "Card Application Toolkit"-Befehl ist.

9. Methode nach Anspruch 1, wobei das mobile System (MOB) ein Programm ausführt, das in der Lage ist, sämtliche Synchronisationsparameter zu empfangen und den Synchronisationsprozess zu starten.

## Revendications

1. Méthode permettant de synchroniser des bases de données (DB1, DB2), une première base de données (DB1) étant stockée dans un appareil mobile (MOB) ou dans un jeton de sécurité (CAR), commandé par un opérateur (OP), couplé à un appareil mobile, et une seconde base de données (DB2) étant stockée dans un système de traitement de données (MNO), ladite méthode comprenant :
a. le téléchargement de l'application (APP) sur le jeton de sécurité (CAR), l'application étant capable de demander à l'appareil mobile d'entamer une procédure de synchronisation de la première base de données avec la seconde base de données, conformément à une politique définie de synchronisation,
b. l'exécution de l'application (APP) ;
c. la réception, par l'application (APP), de messages ou d'événements qui surviennent dans l'appareil mobile (MOB) ou dans un réseau,
d. en réponse aux messages ou événements reçus et conformément à la politique de synchronisation, la conclusion, ou non, par l'application (APP), de la nécessité de synchroniser la première et la seconde bases de données, et
e. dans le cas où une synchronisation est nécessaire, la transmission, par l'application (APP), d'une commande à l'appareil mobile (MOB) qui informe l'appareil mobile qu'une nouvelle synchronisation est requise, ladite commande fournissant à l'appareil mobile (MOB) les informations relatives aux paramètres de synchronisation nécessaires à la synchronisation du contenu de la première base de données (DB1) et de la seconde base de données (DB2),
f. le déclenchement, par l'appareil mobile (MOB), de la procédure de synchronisation de la première et de la seconde bases de données, en réponse à la réception de la commande.

2. Méthode conformément à la revendication 1, **caractérisée en ce que** les informations comprennent l'identifiant de la base de données (DB2) devant être synchronisée.

3. Méthode conformément à la revendication 1, **caractérisée en ce que** les informations comprennent un protocole de synchronisation devant être utilisé entre l'appareil mobile et le système de traitement de données.

4. Méthode conformément à la revendication 1, **caractérisée en ce que** les informations comprennent l'identifiant de la première base de données (DB1)

5. Méthode conformément à la revendication 1, **caractérisée en ce que** le jeton de sécurité est une carte à puce.

6. Méthode conformément à la revendication 1, **caractérisée en ce que** l'application est informée du résultat de la synchronisation entre la première et la seconde bases de données.

7. Méthode conformément à la revendication 1 ou 6, **caractérisée en ce que** l'application est informée du résultat de la synchronisation si cela a été requis dans la commande.

8. Méthode conformément à la revendication 1, selon laquelle la commande est une commande d'outils pour une application de carte.

9. Méthode conformément à la revendication 1, selon laquelle l'appareil mobile (MOB) exécute un programme capable de recevoir tous les paramètres de synchronisation et de déclencher la procédure de synchronisation.
